# EUROPÄISCHE PATENTSCHRIFT

(11) **EP 3 800 517 B1**
(45) Veröffentlichungstag und Bekanntmachung des Hinweises auf die Patenterteilung: **14.08.2024**
(21) Anmeldenummer: 19201463.7
(22) Anmeldetag: 04.10.2019
(51) Int. Cl.: G05B 9/03, G05B 19/418, G06F 11/20

(54) **VERFAHREN ZUR ERSTELLUNG EINES REDUNDANTEN AUTOMATISIERUNGSSYSTEMS, COMPUTERPROGRAMM UND COMPUTERLESBARES MEDIUM**
METHOD FOR PROVIDING A REDUNDANT AUTOMATION SYSTEM, COMPUTER PROGRAM AND COMPUTER-READABLE MEDIUM
PROCÉDÉ DE CRÉATION D'UN SYSTÈME D'AUTOMATISATION REDONDANT, PROGRAMME INFORMATIQUE ET SUPPORT LISIBLE PAR ORDINATEUR

(43) Veröffentlichungstag der Anmeldung: 07.04.2021
(73) Patentinhaber: Siemens Aktiengesellschaft, 80333 München (DE)
(72) Erfinder: Grosch, Thomas, 90574 Roßtal (DE)
(74) Vertreter: Siemens Patent Attorneys

(56) Entgegenhaltungen:
- EP-A2- 3 070 548
- US-A1- 2012 089 749
- US-A1- 2019 199 626
- US-A1- 2019 302 742
- ANONYMOUS: "IP routing - Wikipedia", WIKIPEDIA, 7 October 2019 (2019-10-07), pages 1 - 3, XP093003854, Retrieved from the Internet <URL:https://en.wikipedia.org/w/index.php?title=IP_routing&oldid=920081455> [retrieved on 20221201]
- ANONYMOUS: "IP address - Wikipedia", WIKIPEDIA, 7 October 2019 (2019-10-07), pages 1 - 11, XP093003969, Retrieved from the Internet <URL:https://en.wikipedia.org/w/index.php?title=IP_address&oldid=920139052> [retrieved on 20221201]

## Beschreibung

Die vorliegende Offenbarung betrifft ein redundantes Automatisierungssystem umfassend zumindest eine zu steuernde, an einem Anlagenstandort aufgestellte Automatisierungsanlage mit zugehörigen Peripherieeinheiten sowie zwei über einen Synchronisationspfad kommunikationstechnisch miteinander gekoppelte, zur Steuerung der Automatisierungsanlage eingerichtete Steuerungsapplikationen, die mit der Automatisierungsanlage kommunikationstechnisch verbunden sind. Eine der Steuerungsapplikationen arbeitet als Master und die andere Steuerungsapplikation als Reserve, wobei für den Fall, dass die als Master arbeitende Steuerungsapplikation ausfällt, die als Reserve arbeitende Steuerungsapplikation deren Funktion als Master übernimmt. Ferner betrifft die vorliegende Erfindung ein Verfahren zur Erstellung eines solchen redundanten Automatisierungssystems. Darüber hinaus betrifft die Erfindung ein Computerprogramm sowie ein computerlesbares Medium zur Durchführung des Verfahrens.

Im Automatisierungsumfeld werden verstärkt hochverfügbare Lösungen gefordert, die dazu geeignet sind, eventuell auftretende Stillstandszeiten einer Automatisierungsanlage auf ein Minimum zu reduzieren. Vor diesem Hintergrund wurden bereits redundante Automatisierungssysteme der eingangs genannten Art vorgeschlagen. Diese zeichnen sich dadurch aus, dass zwei sich untereinander synchronisierende Steuerungsapplikationen an die Peripherieeinheiten der Automatisierungsanlage angeschlossen sind, so dass die Funktion der als Master arbeitenden Steuerungsapplikation im Falle eines Ausfalls jederzeit von der als Reserve arbeitenden Steuerungsapplikation übernommen werden kann. Bezüglich der Häufigkeit der Synchronisation und deren Umfang können verschiedene Ausprägungen unterschieden werden, insbesondere der Warm-Standby und der Hot-Standby.

In jüngster Vergangenheit wird zunehmend die Möglichkeit diskutiert, Steuerungsapplikationen in eine Cloud zu verlegen. Bei einer Cloud handelt es sich insbesondere um eine Infrastruktur, welche beispielsweise über das Internet verfügbar gemacht wird und welche in der Regel Speicherplatz, Rechenleistung und/oder Anwendungssoftware bereitstellt, ohne dass entsprechende Infrastrukturen auf einem lokalen Rechner installiert und gespeichert sein müssen. Bei einer Cloud wird die Hardware in der Regel nicht von dem Nutzer einer Anwendung bzw. Applikation selbst betrieben oder bereitgestellt. Unter einer Cloud bzw. Cloud-Computing kann insbesondere die Bereitstellung von IT-Infrastruktur als Dienstleistung ggf. von einem entfernten Standort aus zu verstehen sein. Eine Cloud kann über das Internet erreichbar sein, oder auch von einem Unternehmen als so genannte Private Cloud betrieben werden, bei welcher die IT-Infrastruktur über ein Netzwerk, z.B. ein Intranet des Unternehmens, erreichbar ist.

Beim Verlegen von Steuerungsapplikationen in eine Cloud ist zu berücksichtigen, dass bei allen großen Cloud-Anbietern mit jährlichen Ausfallzeiten von mehreren Stunden zu rechnen ist. Die Betrachtung auf Monatsbasis zeigt sogar, dass mit einer MTTF (MTTF: Mean Time To Failure) von weniger als einem Monat gerechnet werden muss, wobei die Ausfälle mit einigen Minuten bis einigen Stunden Downtime einhergehen. So ergab beispielsweise die Analyse der Ausfälle verschiedener Cloud-Anbieter im März 2019 eine durchschnittliche Downtime von ca. 17 Minuten innerhalb des 30-Tage-Zeitraums, wobei die beiden Cloud-Anbieter mit der längsten Ausfallzeit unberücksichtigt blieben. Der Nutzer eines cloudbasierten Dienstes muss also davon ausgehen, dass seine Anwendung monatlich für einige Minuten nicht verfügbar ist. Bei einer Steuerungsapplikation führt dies unvermeidlich zu einem Stillstand der Automatisierungsanlage, der vom Anlagenbetreiber vermutlich nicht akzeptiert wird. In diesem Zusammenhang ist zu beachten, dass heutige speicherprogrammierbare Steuerungen eine typenabhängige mittlere Lebensdauer von 10 Jahren und mehr aufweisen.

Im Ergebnis scheint die heute erreichbare Verfügbarkeit bzw. die erreichbare MTTF von Cloud-Diensten für die derzeitigen Anwendungen wie beispielsweise Webserver oder Datenbanken ausreichend zu sein. Für diese Anwendungen wird häufig versucht, die Verfügbarkeit durch Cold- oder Warm-Standby-Systeme zu erhöhen, die dann im Falle eines Ausfalls gestartet werden. Für Anwendungen in der Automatisierungstechnik wird die Verfügbarkeit indes als nicht ausreichend angesehen, da der Zustand der Steuerungsapplikationen und damit des Automatisierungsprozesses im Falle eines Ausfalls erhalten bleiben muss. Dies ist nur durch den Einsatz so genannter Hot-Standby-Systeme zu erreichen.

Die EP 3 547 618 A1 offenbart eine ausfallgesichterte Steuerungseinheit mit einem Primär- und einem Sekundärgerät, welch über eine erste Synchronisierungsverbindung miteinander verbunden sind. Über eine Vermittlungsfunktionseinheit kann das Primärgerät dem Sekundärgerät Daten für eine weitere zweite Synchronisationsverbindung unabhängig von der ersten bereitstellen.

Ausgehend von diesem Stand der Technik ist es eine Aufgabe der vorliegenden Erfindung, ein alternatives Verfahren zur Erstellung eines solchen zu schaffen.

Das Verfahren ist für ein redundantes Automatisierungssystem gedacht, umfassend zumindest eine zu steuernde, an einem Anlagenstandort aufgestellte Automatisierungsanlage sowie zwei über einen Synchronisationspfad kommunikationstechnisch miteinander gekoppelte, zur Steuerung der Automatisierungsanlage eingerichtete, einen Teil einer Cloud-Computing-Struktur bildende Steuerungsapplikationen, deren Rechenressourcen an unterschiedlichen Standorten vorgesehen sind und die über das Internet oder über ein vergleichbares Rechnernetzwerk, das eine Vielzahl von Kommunikationsknotenpunkten und diese miteinander verbindende Kommunikationspfaden aufweist, mit der Automatisierungsanlage kommunikationstechnisch verbunden sind, wobei eine der Steuerungsapplikationen als Master und die andere Steuerungsapplikation als Reserve arbeitet, wobei für den Fall, dass die als Master arbeitende Steuerungsapplikation ausfällt, die als Reserve arbeitende Steuerungsapplikation deren Funktion als Master übernimmt, und wobei die Standorte der Rechenressourcen für die Steuerungsapplikationen derart gewählt sind, dass die Steuerungsapplikationen über zwei verschiedene, erfindungsgemäß keine gemeinsamen Kommunikationsknotenpunkten aufweisende Kommunikationspfade mit Automatisierungsanlage verbunden sind. Beispielweise werden also die Steuerungsapplikationen in eine Cloud verlegt. Zur Verbesserung der MTTF sind die Steuerungsapplikationen dabei über getrennte Kommunikationspfade des Internets bzw. des vergleichbaren Rechnernetzwerks kommunikationstechnisch an die Automatisierungsanlage bzw. an deren Peripherieeinheiten angebunden. Dabei ist sichergestellt, dass die Kommunikationspfade keine oder, sollte dies aufgrund des Anlagenstandorts und/oder der Standorte der Rechenressourcen für die Steuerungsapplikationen in Bezug auf die Topologie des Internets oder des vergleichbaren Rechnernetzwerkes nicht möglich sein, eine minimale Anzahl von gemeinsamen Kommunikationsknotenpunkten aufweisen. Dies ist dahingehend von Vorteil, dass, sollte der Kommunikationspfad zwischen der als Master arbeitenden Steuerungsapplikation und der Automatisierungsanlage ausfallen, die sichere Funktion des Kommunikationspfads zwischen der als Reserve arbeitenden Steuerungsapplikation und der Automatisierungsanlage gewährleistet ist und die als Reserve arbeitende Steuerungsapplikation die Funktion als Master übernehmen kann. Dies führt zu einer Verbesserung der MTTF der Steuerungsanwendungen auf einen für die Automatisierungstechnik nutzbaren Wert.

Bei dem die Steuerungsapplikationen miteinander verbindenden Synchronisationspfad handelt es sich um einen Kommunikationspfad des Internet oder des vergleichbaren Rechnernetzwerks, wobei der Synchronisationspfad und die beiden die Steuerungsapplikationen mit der Automatisierungsanlage verbindenden Kommunikationspfade keine von gemeinsamen Kommunikationsknotenpunkten aufweisen. Dies führt ebenfalls zur Verbesserung der MTTF der Steuerungsanwendungen.

Erfindungsgemäß handelt es sich bei den Rechenressourcen für die Steuerungsapplikationen um Rechenzentren, also um Gebäude bzw. Räumlichkeiten, in denen die zentrale Rechentechnik eines oder auch mehrerer Unternehmen untergebracht ist. Der Vorteil besteht darin, dass auf bereits bestehende Ressourcen zurückgegriffen wird.

Vorteilhaft sind die Rechenressourcen für die Steuerungsapplikationen energieversorgungstechnisch voneinander entkoppelt. Handelt es sich bei den Rechenressourcen beispielsweise um verschiedene, energieversorgungstechnisch voneinander entkoppelte Rechenzentren, so ist die Verfügbarkeit des Automatisierungssystems auch dann gegeben, wenn die Energieversorgung eines Rechenzentrums ausfällt. Insbesondere werden die Standorte der Rechenressourcen für die Steuerungsapplikationen von vollständig voneinander entkoppelten Inselnetzen mit Energie versorgt. So können die Standorte beispielsweise derart gewählt sein, dass sie in unterschiedlichen Regionen oder Ländern angeordnet sind, deren Energieversorgung nicht miteinander gekoppelt ist.

Die eingangs genannte Aufgabe wird durch ein Verfahren gemäß dem Anspruch 1 gelöst.

In einem ersten Schritt a) werden Informationen über die Netzwerktopologie des Internets oder eines vergleichbaren Rechnernetzwerks gesammelt und bereitgestellt, also Informationen über die spezifische Anordnung der Geräte und Leitungen, die das Internet bzw. Rechnernetzwerk bilden, über das Computer untereinander verbunden sind und Daten austauschen, wobei unter dem Begriff "Leitungen" nicht nur kabelgebundene, sondern auch funkbasierte Übertragungsstrecken verstanden werden. Die Informationen können basierend auf statischen Informationen, wie beispielsweise Karten zu den derzeit vorhandenen Tiefseekabeln, und/oder durch Ermittlung der Netzwerktopologie mittels Netzwerkmanagement-Protokollen etc. gewonnen werden. In einem weiteren Schritt b) werden Informationen über innerhalb der Netzwerktopologie vorhandene Rechenzentren einschließlich Informationen über deren Standorte bereitgestellt. Im Schritt c) wird der Anlagestandort einer zu steuernden Automatisierungsanlage innerhalb der Netzwerktopologie identifiziert. Nach der Durchführung der Schritte a) bis c) liegen grundsätzlich sämtliche Informationen vor, die es benötigt, um die zu steuernde Automatisierungsanlage bzw. deren Peripherieeinheiten mit einem der Rechenzentren zu verbinden. In einem weiteren Schritt d) wird zumindest ein Paar von Rechenzentren identifiziert, die innerhalb der Netzwerktopologie über Kommunikationspfade mit der Automatisierungsanlage verbunden werden können und keine Überschneidungen und/oder keine gemeinsamen Kommunikationspunkte aufweisen · Es werden also diejenigen Rechenzentren identifiziert, die sich auf vollständig voneinander unabhängigen Kommunikationspfaden der bekannten Netzwerktopologie mit der Automatisierungsanlage verbinden lassen. In einem Schritt e) wird dann eines der in Schritt d) identifizierten Paare von Rechenzentren einschließlich der zugehörigen Kommunikationspfade ausgewählt. Entsprechend wird eine maximale MTTF für den Fall erzielt, dass einer der Kommunikationspfade zwischen dem Automatisierungssystem und einem der beiden Rechenzentren ausfallen sollte.

Zusätzlich weist das Verfahren die weiteren Schritte auf: f) Bereitstellen von zwei zur Steuerung der Automatisierungsanlage eingerichteten Steuerungsapplikationen, wobei die Steuerungsapplikationen derart eingerichtet sind, dass eine der Steuerungsapplikationen als Master und die andere Steuerungsapplikation als Reserve arbeitet, und dass für den Fall, dass die als Master arbeitende Steuerungsapplikation ausfällt, die als Reserve arbeitende Steuerungsapplikation deren Funktion als Master übernimmt, g) Speichern der Steuerungsapplikationen in den in Schritt e) ausgewählten Rechenzentren; h) Koppeln der Steuerungsapplikationen über einen Synchronisationspfad; und i) Verbinden der Steuerungsapplikationen mit der Automatisierungsanlage über die in Schritt e) ausgewählten Kommunikationspfade.

Dabei wird der in Schritt h) ausgewählte Synchronisationspfad bevorzugt derart gewählt, dass der Synchronisationspfad und die beiden die Steuerungsapplikationen mit der Automatisierungsanlage verbindenden Kommunikationspfade keine oder eine minimale Anzahl von gemeinsamen Kommunikationsknotenpunkten aufweisen.

Erfindungsgemäß werden in Schritt b) Zusatzinformationen über die Stromversorgung und/oder über die aktuelle Auslastung und/oder über die Rechenleistung der Rechenzentren bereitgestellt, wobei die Auswahl in Schritt e) unter Berücksichtigung zumindest einer dieser Zusatzinformationen erfolgt. Wurden in Schritt d) beispielsweise mehrere potenzielle Paare von Rechenzentren ermittelt, mit denen die Automatisierungsanlage über verschiedene Kommunikationspfade verbunden werden könnte, so wird die Auswahl in Schritt e) basierend auf weiteren Kriterien getroffen. Beispielsweise kann geprüft werden, welche Paare von Rechenzentren unabhängige Stromversorgungen aufweisen, so dass nur Paare von Rechenzentren mit unabhängiger Stromversorgung in die engere Auswahl kommen. Alternativ oder zusätzlich kann die aktuelle Auslastung der Rechenzentren der in Schritt d) identifizierten Paare geprüft werden. Entsprechend würden bei der Auswahl in Schritt e) diejenigen Paare bevorzugt werden, deren Rechenzentren eine geringe Auslastung aufweisen. Alternativ oder zusätzlich kann auch die Rechenleistung der entsprechenden Rechenzentren als Auswahlkriterium in Schritt e) herangezogen werden, wobei Rechenzentren mit hoher Rechenleistung der Vorrang gewährt wird. Fließen mehrere zusätzliche Kriterien in die Auswahl in Schritt e) ein, so können den einzelnen Kriterien Prioritäten oder Wichtigkeitskennzahlen zugewiesen werden.

Ein weiterer Gegenstand der vorliegenden Erfindung ist ein Computerprogramm umfassend Programmcode-Mittel, die bei der Ausführung des Programms auf wenigstens einem Computer, den wenigstens einen Computer veranlassen, die Schritte des erfindungsgemäßen Verfahrens durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB- oder Flashspeicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung unter Bezugnahme auf die beiliegende Zeichnung deutlich. Dabei zeigt
- FIG 1: ein Ablaufdiagramm, das schematisch die Verfahrensschritte eines Verfahrens gemäß einer Ausführungsform der vorliegenden Erfindung;
- FIG 2: eine schematische Ansicht einer Topologie eines Netzwerkes;
- FIG 3: eine Ansicht gemäß FIG 2 mit ergänzten Datenzentren;
- FIG 4: eine Ansicht gemäß FIG 3 mit ergänzter Automatisierungsanlage;
- FIG 5: eine Ansicht gemäß FIG 4 mit ergänzten Kommunikationspfaden zwischen der Automatisierungsanlage und ausgewählten Rechenzentren;
- FIG 6: eine Ansicht gemäß FIG 5 mit ergänztem ausgewählten Synchronisierungspfad zwischen den ausgewählten Rechenzentren und
- FIG 7: eine schematische Ansicht eines Automatisierungssystems gemäß einer Ausführungsform der vorliegenden Erfindung, das unter Durchführung des in FIG 1 dargestellten Verfahrens erstellt wurde.

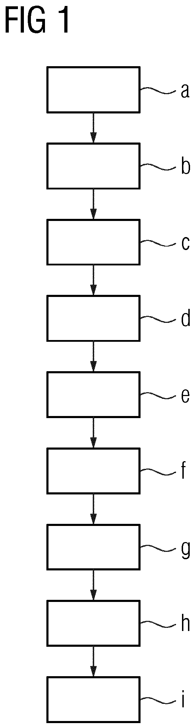

Die FIG 1 zeigt schematisch Verfahrensschritte a) bis i) eines Verfahrens gemäß einer Ausführungsform der vorliegenden Erfindung, das dazu dient, ein redundantes Automatisierungssystem 1 für eine zu steuernde Automatisierungsanlage 2 zu erstellen.

In einem ersten Schritt a) werden Informationen über die Topologie eines Rechnernetzwerks 3 bereitgestellt. Vorliegend handelt es sich bei dem Rechnernetzwerk 3 um das Internet.

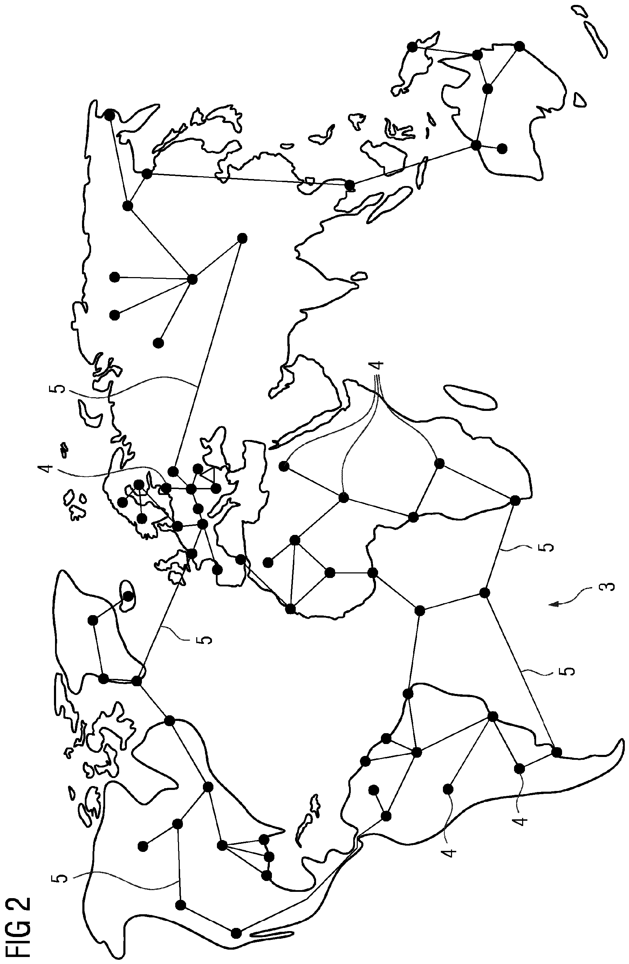

Alternativ kann das Rechnernetzwerk 3 aber auch ein vergleichbares Rechnernetzwerk sein, wie beispielsweise um ein Intranet eines Unternehmens, das eine Vielzahl von Unternehmensstandorten kommunikationstechnisch miteinander verbindet. Bei den in Schritt a) bereitgestellten Informationen handelt es sich zumindest um Informationen über die Struktur oder Teilstruktur des Rechnernetzwerks 3, die durch Kommunikationsknotenpunkte 4 und diese miteinander verbindende Kommunikationspfade 5 gebildet wird. Bei den Kommunikationspfaden 5 kann es sich um kabelgebundene und/oder funkbasierte Übertragungsstrecken handeln. Die Informationen wurden vorliegend basierend auf statischen Informationen gewonnen, wie beispielsweise Karten zu den derzeit vorhandenen Tiefseekabeln und funkbasierten Übertragungsstrecken. Ferner wurden Informationen auch durch Ermittlung der Netzwerktopologie mittels Netzwerkmanagement-Protokollen gewonnen. Zudem können in Schritt a) ergänzende Informationen über das Rechnernetzwerk 3 bereitgestellt werden, wie beispielsweise Informationen über Übertragungsgeschwindigkeiten einzelner Kommunikationspfade 5, anhand von Ausfallstatistiken gesammelte Informationen über die Ausfallwahrscheinlichkeit von Kommunikationsknotenpunkten 4 und/oder Kommunikationspfaden 5, etc. FIG 2 zeigt exemplarisch eine Netzwerktopologie des Rechnernetzwerks 3 bestehend aus Kommunikationsknotenpunkten 4 und Kommunikationspfaden 5, wobei eine Vielzahl von Kommunikationsknotenpunkten 4 und Kommunikationspfaden 5 der besseren Übersichtlichkeit halber weggelassen sind.

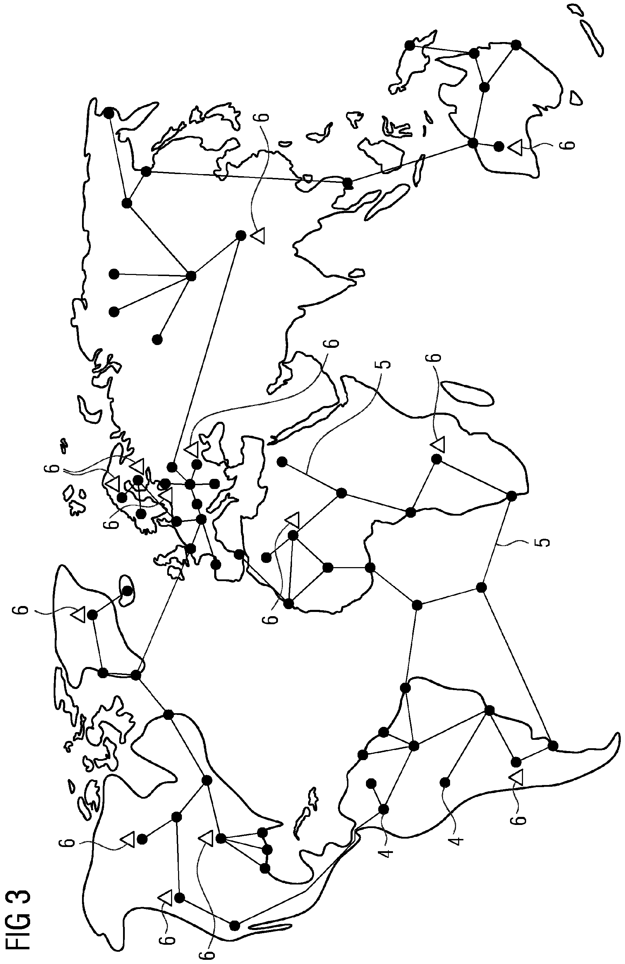

In einem weiteren Schritt b) werden Informationen über innerhalb der in FIG 2 dargestellten Netzwerktopologie vorhandene bzw. an diese angebundene Rechenzentren 6 einschließlich Informationen über deren Standorte bereitgestellt. Dies ist schematisch in FIG 3 dargestellt.

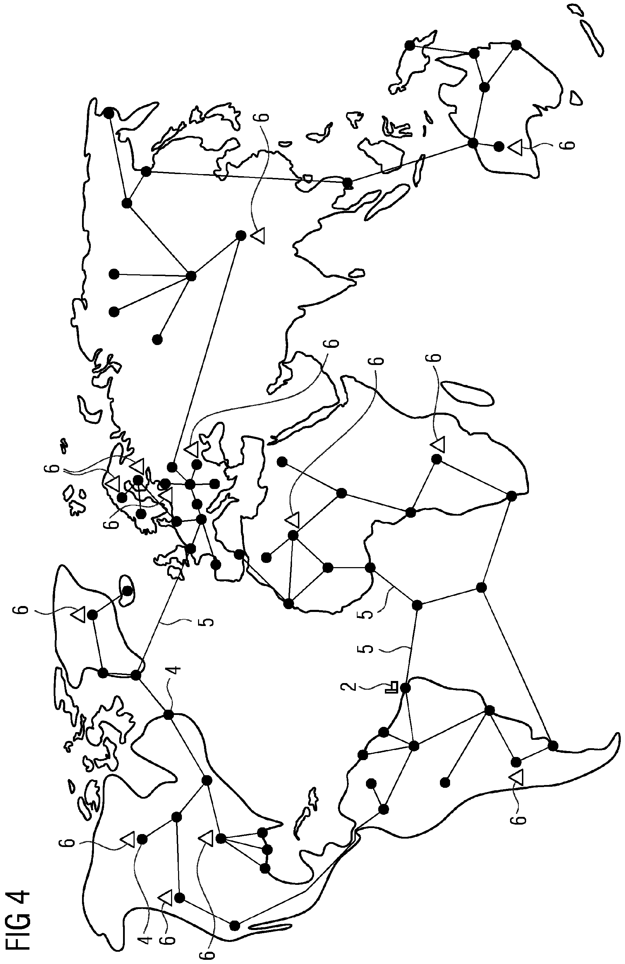

Soll nun für eine Automatisierungsanlage 2 ein Automatisierungssystem 1 erstellt werden, so wird in Schritt c) der Anlagenstandort der Automatisierungsanlage 2 innerhalb der Netzwerktopologie identifiziert, siehe FIG 4.

In einem sich anschließenden Schritt d) wird dann zumindest ein Paar von Rechenzentren 6 identifiziert, die innerhalb der Netzwerktopologie über Kommunikationspfade 5 mit der Automatisierungsanlage 2 verbunden werden können und keine Überschneidungen und/oder keine gemeinsamen Kommunikationsknotenpunkte aufweisen.

Im dargestellten Beispiel können insgesamt 22 solcher Paare gebildet werden. Jedes dieser Paare umfasst ein afrikanisches Rechenzentrum 6 und ein Rechenzentrum 6, das außerhalb von Afrika angeordnet ist.

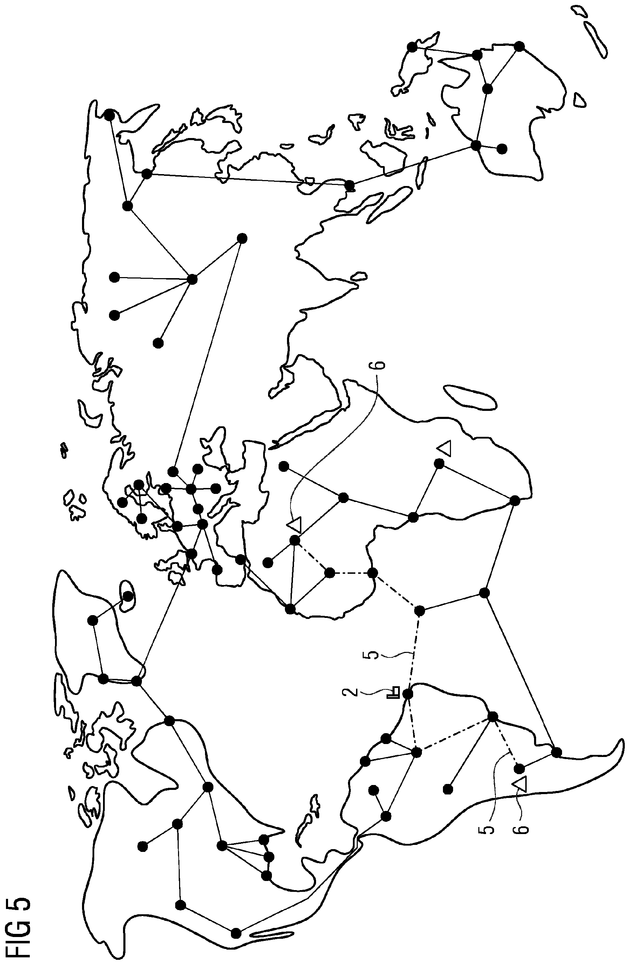

In einem weiteren Schritt e) wird dann ein in Schritt d) identifiziertes Paar von Rechenzentren 6 einschließlich der zugehörigen Kommunikationspfade 5 ausgewählt. Wurden in Schritt d), wie vorliegend der Fall, mehrere Paare von Rechenzentren 6 identifiziert, so kann die Auswahl in Schritt e) anhand weiterer Kriterien erfolgen, wie beispielsweise anhand der zuvor genannten Übertragungsgeschwindigkeiten der einzelnen Kommunikationspfade 5, der Ausfallwahrscheinlichkeit von Kommunikationsknotenpunkten 4 und/oder Kommunikationspfaden 5, etc. Erfindungsgemäß werden in Schritt b) ferner Zusatzinformationen über die Stromversorgung und/oder über die aktuelle Auslastung und/oder über die Rechenleistung der Rechenzentren 6 bereitgestellt, die in Schritt e) zur Auswahl eines optimalen Paars herangezogen werden können. So kann in Schritt e) beispielsweise geprüft werden, welche Paare von Rechenzentren 6 voneinander unabhängige Stromversorgungen aufweisen, wobei dann nur Paare von Rechenzentren 6 mit voneinander unabhängiger Stromversorgung in die engere Auswahl kommen. Alternativ oder zusätzlich kann die aktuelle Auslastung der Rechenzentren 6 geprüft werden, wobei Paare mit gering ausgelasteten Rechenzentren 6 bevorzugt werden. Alternativ oder zusätzlich kann auch eine vergleichsweise hohe Rechenleistung beider Rechenzentren 6 eines Paares ausschlaggebend für die Auswahl sein. Den einzelnen zusätzlichen Kriterien können Gewichtungsfaktoren zugeordnet werden, um diese bei der in Schritt e) zu treffenden Auswahl stärker oder schwächer zu gewichten. FIG 5 zeigt die im vorliegenden Beispiel letztendlich getroffene Auswahl.

In einem Schritt f) werden dann zwei zur Steuerung der Automatisierungsanlage 2 eingerichtete Steuerungsapplikationen 7 bereitgestellt. Die Steuerungsapplikationen 7 sind derart eingerichtet, dass eine der Steuerungsapplikationen 7 als Master und die andere Steuerungsapplikation 7 als Reserve arbeitet, wobei für den Fall, dass die als Master arbeitende Steuerungsapplikation 7 ausfällt, die als Reserve arbeitende Steuerungsapplikation 7 deren Funktion als Master übernimmt.

Im Schritt g) werden die Steuerungsapplikationen 7 in den in Schritt e) ausgewählten Rechenzentren 6 gespeichert.

Daraufhin werden die Steuerungsapplikationen 7 in Schritt h) über einen Synchronisationspfad 8 gekoppelt, der bevorzugt derart gewählt wird, dass der Synchronisationspfad 8 und die beiden die Steuerungsapplikationen 7 mit der Automatisierungsanlage 2 verbindenden Kommunikationspfade 5 keine Überschneidungen und/oder eine minimale Anzahl von gemeinsamen Kommunikationsknotenpunkten 4 aufweisen. Ist dies nicht möglich, so werden die Kommunikationspfade 5 und der Synchronisationspfad 8 derart gewählt, dass diese möglichst wenige Überschneidungen und/oder gemeinsame Knotenpunkte 4 aufweisen.

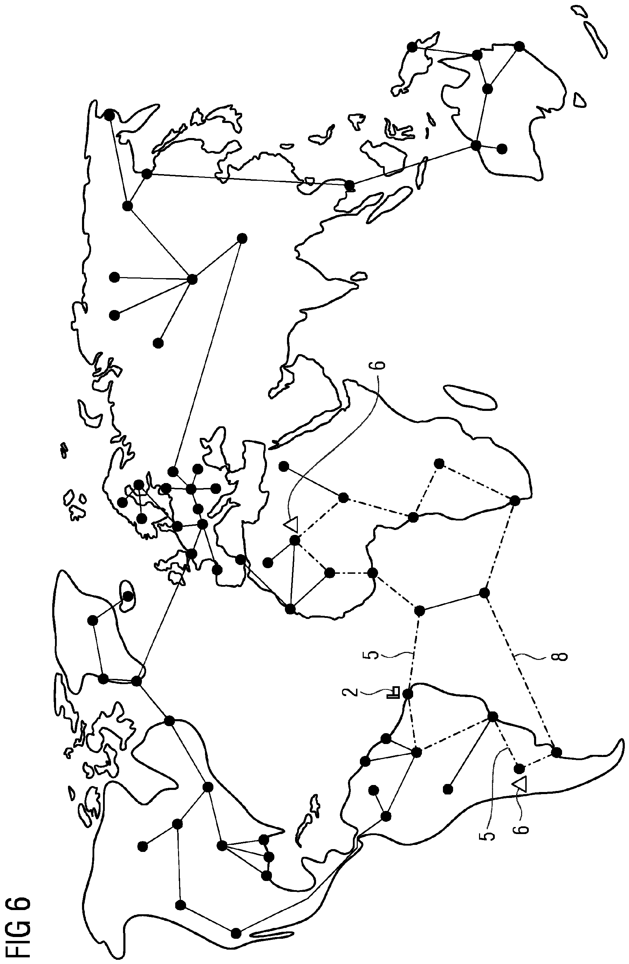

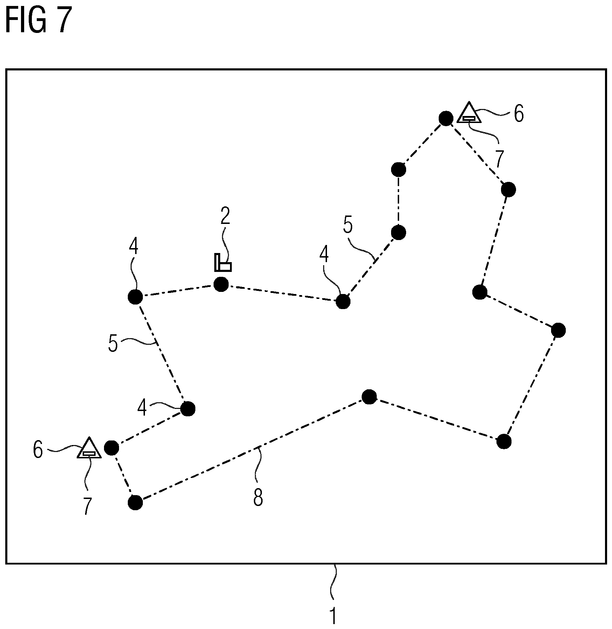

In Schritt i) werden die Steuerungsapplikationen 7 mit der Automatisierungsanlage 2 über die in Schritt e) ausgewählten Kommunikationspfade 5 und die Rechenzentren 6 über den ausgewählten Synchronisationspfad 8 verbunden. Im Ergebnis gibt sich die in FIG 6 dargestellte Anordnung bzw. das in FIG 7 dargestellte Automatisierungssystem.

Vorliegend ist ein Computerprogramm umfassend Programmcode-Mittel vorgesehen, die bei der Ausführung des Programms auf wenigstens einen Computer den wenigstens einen Computer veranlassen, die Schritte des zuvor beschriebenen Verfahrens durchzuführen. Lediglich die Identifikation des Anlagenstandorts in Schritt c) muss durch Eingabe eines Benutzers erfolgen.

Das erfindungsgemäße Automatisierungssystem 1 zeichnet sich trotz der Tatsache, dass seine Steuerungsapplikationen 7 einen Teil einer Cloud-Computing-Struktur bilden, durch eine sehr hohe Verfügbarkeit aus. Diese Verfügbarkeit kann durch die Art des Synchronisationsmechanismus, mit dem die Steuerungsapplikationen 7 synchronisiert werden, und durch die Art und Weise, wie die Ausgangsdaten in dem redundanten Automatisierungssystem 1 gehandhabt werden, weiter optimiert werden. In diesem Zusammenhang wird insbesondere auf das in der Druckschrift EP 2 657 797 B1 offenbarte Verfahren zum Betreiben eines redundanten Automatisierungssystems 1 Bezug genommen, das sich auch auf das erfindungsgemäße redundante Automatisierungssystem 1 übertragen lässt.

## Patentansprüche

1. Verfahren zur Erstellung eines redundanten Automatisierungssystems (1), wobei das Verfahren die Schritte aufweist:
a) Bereitstellen von Informationen über eine Netzwerktopologie eines Rechnernetzwerks einschließlich Informationen über die Struktur oder Teilstruktur des Rechnernetzwerks, die durch Kommunikationsknotenpunkten (4) und über diese miteinander verbindende Kommunikationspfade (5) gebildet wird;
b) Bereitstellen von Informationen über innerhalb der Netzwerktopologie vorhandene Rechenzentren (6) einschließlich Informationen über deren Standorte;
c) Identifikation des Anlagenstandorts einer zu steuernden Automatisierungsanlage (2) innerhalb der Netzwerktopologie;
d) Identifikation zumindest eines Paars von Rechenzentren (6), die sich innerhalb der Netzwerktopologie auf vollständig voneinander unabhängigen Kommunikationspfaden der bekannten Netzwerktopologie mit der Automatisierungsanlage verbinden lassen;
e) Auswahl eines in Schritt d) identifizierten Paars von Rechenzentren (6) einschließlich der zugehörigen Kommunikationspfade (5);
f) Bereitstellen von zwei zur Steuerung der Automatisierungsanlage (2) eingerichteten Steuerungsapplikationen (7), wobei die Steuerungsapplikationen (7) derart eingerichtet sind, dass eine der Steuerungsapplikationen (7) als Master und die andere Steuerungsapplikation (7) als Reserve arbeitet, und dass für den Fall, dass die als Master arbeitende Steuerungsapplikation (7) ausfällt, die als Reserve arbeitende Steuerungsapplikation (7) deren Funktion als Master übernimmt;
g) Speichern der Steuerungsapplikationen (7) in den in Schritt e) ausgewählten Rechenzentren (6);
h) Koppeln der Steuerungsapplikationen (7) über einen Synchronisationspfad (8); und
i) Verbinden der Steuerungsapplikationen (7) mit der Automatisierungsanlage (2) über die in Schritt e) ausgewählten Kommunikationspfade (5), wobei der Synchronisationspfad (8) derart gewählt wird, dass der Synchronisationspfad (8) und die beiden die Steuerungsapplikationen (7) mit der Automatisierungsanlage (2) verbindenden Kommunikationspfade (5) keine gemeinsamen Kommunikationsknotenpunkte (4) aufweisen, **dadurch gekennzeichnet, dass** in Schritt b) Zusatzinformationen über die Stromversorgung und/oder über die aktuelle Auslastung und/oder über die Rechenleistung der Rechenzentren (6) bereitgestellt werden, und dass die Auswahl in Schritt e) unter Berücksichtigung zumindest einer dieser Zusatzinformationen erfolgt.

2. Computerprogramm umfassend Programmcode-Mittel, die bei der Ausführung des Programms auf wenigstens einem Computer den wenigstens einen Computer veranlassen, die Schritte des Verfahrens nach Anspruch 1 durchzuführen.

3. Computerlesbares Medium, das Instruktionen umfasst, die, wenn sie auf wenigstens einem Computer ausgeführt werden, den wenigstens einen Computer veranlassen, die Schritte des Verfahrens nach Anspruch 1 durchzuführen.

## Claims

1. Method for creating a redundant automation system (1), wherein the method has the steps:
a) providing information on a network topology of a computer network including information on the structure or partial structure of the computer network, which are formed by communication hubs (4) and by communication paths (5) connecting these to one another;
b) providing information on computing centres (6) present within the network topology, including information on the locations thereof;
c) identifying the installation location of an automation installation (2) to be controlled within the network topology;
d) identifying at least one pair of computing centres (6), which can be connected to the automation installation on completely independent communication paths of the known network topology;
e) selecting a pair of computing centres (6) identified in step d) including the associated communication paths (5);
f) providing two control applications (7) configured to control the automation installation (2), wherein the control applications (7) are configured such that one of the control applications (7) works as the master and the other control application (7) as a reserve and that, in the event of the control application (7) working as the master control failing, the control application (7) working as a reserve (7) takes over the function as master;
g) storing the control applications (7) in the computing centres (6) selected in step e);
h) coupling the control applications (7) via a synchronisation path (8); and
i) connecting the control applications (7) to the automation installation (2) via the communication paths (5) selected in step e), wherein the synchronisation path (8) is selected such that the synchronisation path (8) and the two communication paths (5) connecting the control applications (7) to the automation installation (2) have no common communication hubs (4), **characterised in that** in step b) additional information on the power supply and/or on the present utilisation and/or on the computing power of computing centres (6) is provided and that the selection in step e) takes place taking account of at least one item of this additional information.

2. Computer program comprising program code means, which, on the execution of the program on at least one computer, prompt the at least one computer to carry out the steps of the method according to claim 1.

3. Computer-readable medium that comprises instructions, which, when they are executed on at least one computer, prompt the at least one computer to carry out the steps of the method according to claim 1.

## Revendications

1. Procédé de création d'un système (1) d'automatisation redondant, dans lequel le procédé a les stades :
a) on se procure des informations sur une topologie de réseau d'un réseau informatique y compris des informations sur la structure ou la structure partielle du réseau informatique, qui est formée par des points (4) nodaux de communication et par des chemins (5) de communication reliant ceux-ci entre eux ;
b) on se procure des informations sur des centres (6) de calcul présents au sein de la topologie du réseau y compris des informations sur leurs remplacements ;
c) on identifie l'emplacement d'une installation (2) d'automatisation à commander au sein de la topologie du réseau ;
d) on identifie au moins une paire de centres (6) de calcul, qui peuvent, au sein de la topologie du réseau, être reliés à l'installation d'automatisation sur des chemins de communication complètement indépendants les uns des autres de la topologie connue du réseau ;
e) on sélectionne une paire identifiée au stade d) de centres (6) de calcul y compris les chemins (5) de communication leur appartenant ;
f) on se procure deux applications (7) de commande agencées pour la commande de l'installation (2) d'automatisation, dans lequel les applications (7) de commande sont agencées, de manière à ce que l'une des applications (7) de commande opère en maître et de manière à ce que l'autre application (7) de commande opère en réserve et en ce que, dans le cas où l'application (7) de commande opérant en maître est défaillante, l'application (7) de commande opérant en réserve en prend en charge la fonction en tant que maître ;
g) on met les applications (7) de commande en mémoire dans les centres (6) de calcul sélectionnés au stade e) ;
h) on relie les applications (7) de commande par un chemin (8) de synchronisation ; et
i) on relie les applications (7) de commande à l'installation (2) d'automatisation par les chemins (5) de communication sélectionnés dans le stade e), dans lequel on choisit un chemin (8) de synchronisation, de manière à ce que le chemin (8) de synchronisation et les deux chemins (5) de communication reliant les applications (7) de commande à l'installation (2) de communication n'aient pas de point (4) nodal de communication commun, **caractérisé en ce que** dans le stade b) on se procure des informations supplémentaires sur l'alimentation en courant et/ou sur la charge en cours et/ou sur la puissance de calcul des centres (6) de calcul et **en ce que** la sélection dans le stade e) s'effectue en tenant compte de l'une au moins de ces informations supplémentaires.

2. Programme informatique comprenant des moyens de code de programme, qui, lors de la réalisation du programme sur au moins un ordinateur, font que le au moins ordinateur exécute les stades du procédé suivant la revendication 1.

3. Support déchiffrable par ordinateur, qui comprend des instructions qui, lorsqu'elles sont exécutées sur au moins un ordinateur, font que le au moins ordinateur exécute les stades du procédé suivant la revendication 1.
